# EUROPÄISCHE PATENTSCHRIFT

(11) **EP 1 247 007 B1**
(45) Veröffentlichungstag und Bekanntmachung des Hinweises auf die Patenterteilung: **17.01.2007**
(21) Anmeldenummer: 00989777.8
(22) Anmeldetag: 17.11.2000
(51) Int. Cl.: F01N 11/00, F02D 41/40

(54) **VERFAHREN ZUR DIAGNOSE EINES KATALYSATORS EINER BRENNKRAFTMASCHINE**
METHOD OF DIAGNOSING A CATALYST OF AN INTERNAL COMBUSTION ENGINE
PROCEDE DE DIAGNOSTIQUE D'UN CATALYSEUR D'UN MOTEUR A COMBUSTION INTERNE

(30) Priorität: 31.12.1999 DE 19963932
(43) Veröffentlichungstag der Anmeldung: 09.10.2002
(73) Patentinhaber: ROBERT BOSCH GMBH, 70442 Stuttgart (DE)
(72) Erfinder: SCHNAIBEL, Eberhard, 71282 Hemmingen (DE); KORING, Andreas, 71636 Ludwigsburg (DE); BELLMANN, Holger, 71636 Ludwigsburg (DE)
(86) Internationale Anmeldenummer: PCT/DE2000/004042
(87) Internationale Veröffentlichungsnummer: WO 2001/049987

(56) Entgegenhaltungen:
- EP-A- 0 609 527
- DE-A- 4 330 997
- DE-A- 19 811 574
- US-A- 5 967 113
- SIDERIS M: "Methods for monitoring and diagnosing the Efficiency of Catalytic Converters - A Patent oriented Survey" , EPO APPLIED TECHNOLOGY SERIES. VOL. 14. STUDIES IN SURFACE SCIENCE AND CATALYSIS. VOL. 115,NL,AMSTERDAM, ELSEVIER, PAGE(S) 260-261 XP002076999 ISBN: 0-444-82952-0

## Beschreibung

### Stand der Technik

Die Erfindung betrifft ein Verfahren zur Diagnose eines Katalysators einer Brennkraftmaschine insbesondere eines Kraftfahrzeugs, bei dem Kraftstoff in einer ersten Betriebsart während einer Ansaugphase und in einer zweiten Betriebsart während einer Verdichtungsphase in einen Brennraum direkt eingespritzt und verbrannt wird, und bei dem bei der verbrennung entstehendes Abgas dem Katalysator zugeführt wird. Ebenfalls betrifft die Erfindung ein Steuergerät für eine Brennkraftmaschine insbesondere eines Kraftfahrzeugs sowie eine Brennkraftmaschine insbesondere für ein Kraftfahrzeug.

Aus der US-A-5967113 ist eine Brennkraftmaschine mit einer Benzin-Direkteinspritzung bekannt.

Dort wird der Kraftstoff in einem Homogenbetrieb während der Ansaugphase oder in einem Schichtbetrieb während der Verdichtungsphase in den Brennraum der Brennkraftmaschine eingespritzt. Der Homogenbetrieb ist vorzugsweise für den Vollastbetrieb der Brennkraftmaschine vorgesehen, während der Schichtbetrieb für den Leerlauf- und Teillastbetrieb geeignet ist. Beispielsweise in Abhängigkeit von dem angeforderten Drehmoment wird bei einer derartigen direkteinspritzenden Brennkraftmaschine zwischen den genannten Betriebsarten umgeschaltet.

Insbesondere zur Ausführung des Schichtbetriebs ist es erforderlich, dass ein Katalysator vorhanden ist, mit dem entstehende Stickoxide in einem Speicherkatalysator zwischengespeichert werden können, um sie während eines nachfolgenden Homogenbetriebs zu reduzieren. Der Speicherkatalysator wird im Schichtbetrieb mit den Stickoxiden beladen und im Homogenbetrieb wieder entladen. Dieses Be- und Entladen sowie die damit verbundene Konvertierung von Stickoxiden in Stickstoff und Sauerstoff führt zu einer Alterung des Katalysators.

### Aufgabe und Vorteile der Erfindung

Aufgabe der Erfindung ist es, ein Verfahren zum Betreiben eines Speicherkatalysators einer Brennkraftmaschine zu schaffen, mit dem die Alterung des Speicherkatalysators erkannt werden kann.

Diese Aufgabe wird bei einem Verfahren der eingangs genannten Art erfindungsgemäß dadurch gelöst, dass in der zweiten Betriebsart im Anschluss an eine Verbrennung zusätzlich Kraftstoff eingespritzt wird, und dass die Temperatur des Abgases in dem oder nach dem Katalysator gemessen und mit einem Schwellwert verglichen wird. Bei einem Steuergerät und einer Brennkraftmaschine der jeweils eingangs genannten Art wird die Aufgabe entsprechend gelöst.

Das in der Brennkraftmaschine entstehende Abgas enthält Schadstoffe, die in dem Katalysator konvertiert werden. Dabei handelt es sich insbesondere um unverbrannte Kohlenwasserstoffe und um Kohlenmonoxid. Die Konvertierung dieser Schadstoffe führt zu einer Temperaturerhöhung der entstehenden Abgase. Diese Temperaturerhöhung wird jedoch bei einem gealterten Katalysator aufgrund einer verminderten Konvertierungsfähigkeit geringer. Damit ist es grundsätzlich möglich, die entstehende Temperaturerhöhung als Maß für die Alterung des Katalysators heranzuziehen.

An sich entsteht die genannte Temperaturerhöhung auch ohne den zusätzlich eingespritzten Kraftstoff. In diesem Fall wird die Temperaturerhöhung insbesondere bei einem gealterten Katalysator jedoch so gering, dass dies keine sichere Ermittlung der Alterung des Katalysators mehr zulässt.

Durch die Einspritzung von zusätzlichem Kraftstoff wird eine zusätzliche Konvertierung und damit eine zusätzliche Temperaturerhöhung der Abgase erreicht. Dies lässt eine sichere und zuverlässige Bestimmung des Alterungszustands des Katalysators zu.

Bei einer vorteilhaften Weiterbildung der Erfindung wird eine Temperaturerhöhung gemessen und mit einer Temperaturerhöhung verglichen, die bei einem neuen Katalysator gemessen worden ist, und es wird die Differenz mit einem oberen Grenzwert verglichen. Damit ist es in einfacher Weise möglich, einen gealterten Katalysator zu erkennen.

In ähnlich vorteilhafter Weise wird eine Temperaturerhöhung gemessen und mit einer modellierten Temperaturerhöhung verglichen, und es wird die Differenz mit einem oberen Grenzwert verglichen.

Bei einer weiteren vorteilhaften Weiterbildung der Erfindung wird eine Maximaltemperatur gemessen und mit einem unteren Schwellwert verglichen. Dies stellt eine besonders einfach und schnell durchzuführende Möglichkeit zur Realisierung der Erfindung dar.

Besonders vorteilhaft ist es, wenn der zusätzlich eingespritzte Kraftstoff nicht entzündet wird. Damit wird gewährleistet, dass unverbrannter Kraftstoff in der Form von unverbrannten Kohlenwasserstoffen bzw. Kohlenmonoxid in das Abgasrohr und in den Katalysator gelangt und dort zu einer erhöhten Temperatur führt.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory oder ein Flash-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Ausführungsbeispiele der Erfindung

- Figur 1: zeigt eine schematische Darstellung eines Ausführungsbeispiels einer erfindungsgemäßen Brennkraftmaschine, und
- Figur 2: zeigt ein schematisches Schaubild von Temperaturerhöhungen bei der Brennkraftmaschine der Figur 1.

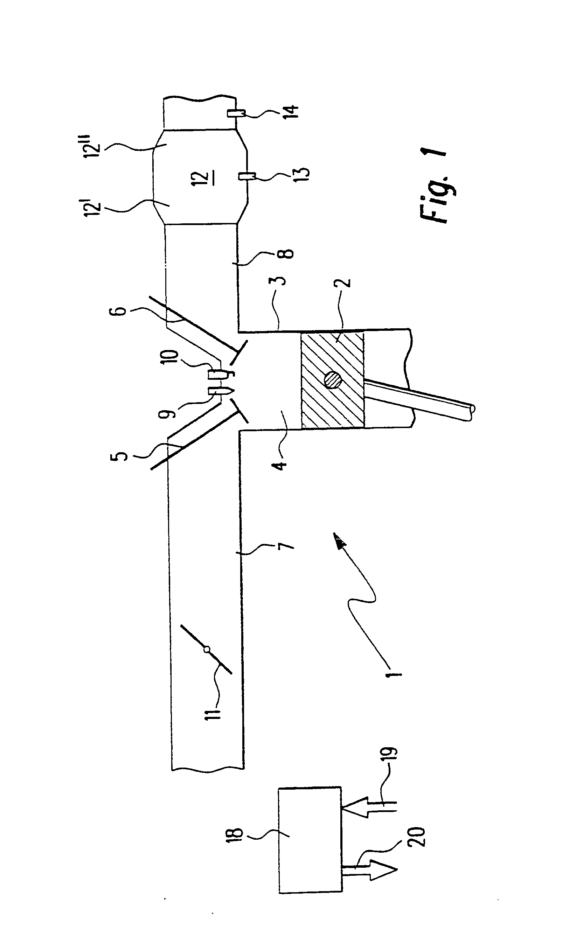

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlassventil 5 und ein Auslassventil 6 begrenzt ist. Mit dem Einlassventil 5 ist ein Ansaugrohr 7 und mit dem Auslassventil 6 ist ein Abgasrohr 8 gekoppelt.

Im Bereich des Einlassventils 5 und des Auslassventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr B ist ein Katalysator 12 untergebracht, der der Reinigung der durch die Verbrennung des Kraftstoffs entstehenden Abgase dient.

Bei dem Katalysator 12 handelt es sich im vorliegenden Ausführungsbeispiel um einen Dreiwegekatalysator 12', der mit einem Speicherkatalysator 12'' kombiniert ist. Es versteht sich, daß auch andere Arten und/oder Kombinationen von Katalysatoren denkbar sind. So können auch Vor- und Hauptkatalysatoren und dergleichen vorgesehen sein.

Wesentlich ist, daß der Katalysator 12 zur Behandlung und insbesondere zur Konvertierung der Schadstoffe des von der Brennkraftmaschine 1 erzeugten Abgases geeignet ist.

In dem Katalysator 12 ist ein Temperatursensor 13 vorgesehen. Alternativ oder zusätzlich ist in dem Abgasrohr unmittelbar nach dem Katalysator 12 ein Temperatursensor 14 vorgesehen.

Ein Steuergerät 18 ist von Eingangssignalen 19 beaufschlagt, die mittels Sensoren gemessene Betriebsgrößen der Brennkraftmaschine 1 darstellen. Das Steuergerät 18 erzeugt Ausgangssignale 20, mit denen über Aktoren bzw. Steller das Verhalten der Brennkraftmaschine 1 beeinflusst werden kann. Unter anderem ist das Steuergerät 18 dazu vorgesehen, die Betriebsgrößen der Brennkraftmaschine 1 zu steuern und/oder zu regeln. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

In einer ersten Betriebsart, einem sogenannten Homogenbetrieb der Brennkraftmaschine 1, wird die Drosselklappe 11 in Abhängigkeit von dem erwünschten Drehmoment teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig über die Drosselklappe 11 angesaugte Luft wird der eingespritzte Kraftstoff verwirbelt und damit in dem Brennraum 4 im Wesentlichen gleichmäßig verteilt. Danach wird das Kraftstoff/Luft-Gemisch während der Verdichtungsphase verdichtet, um dann von der Zündkerze 10 entzündet zu werden. Durch die Ausdehnung des entzündeten Kraftstoffs wird der Kolben 2 angetrieben. Das entstehende Drehmoment hängt im Homogenbetrieb unter anderem von der Stellung der Drosselklappe 11 ab. Im Hinblick auf eine geringe Schadstoffentwicklung wird das Kraftstoff/Luft-Gemisch möglichst auf Lambda gleich Eins eingestellt.

In einer zweiten Betriebsart, einem sogenannten Schichtbetrieb der Brennkraftmaschine 1, wird die Drosselklappe 11 weit geöffnet. Der Kraftstoff wird von dem Einspritzventil 9 während einer durch den Kolben 2 hervorgerufenen Verdichtungsphase in den Brennraum 4 eingespritzt, und zwar örtlich in die unmittelbare Umgebung der Zündkerze 10 sowie zeitlich in geeignetem Abstand vor dem Zündzeitpunkt. Dann wird mit Hilfe der Zündkerze 10 der Kraftstoff entzündet, so dass der Kolben 2 in der nunmehr folgenden Arbeitsphase durch die Ausdehnung des entzündeten Kraftstoffs angetrieben wird. Das entstehende Drehmoment hängt im Schichtbetrieb weitgehend von der eingespritzten Kraftstoffmasse ab. Im Wesentlichen ist der Schichtbetrieb für den Leerlaufbetrieb und den Teillastbetrieb der Brennkraftmaschine 1 vorgesehen.

Der Speicherkatalysator 12'' des Katalysators 12 wird während des Schichtbetriebs mit Stickoxiden beladen. In einem nachfolgenden Homogenbetrieb wird der Speicherkatalysator 12" wieder entladen und die Stickoxide werden von dem Dreiwegekatalysator 12' reduziert.

Der Speicherkatalysator 12" nimmt während seiner fortlaufenden Be- und Entladung mit Stickoxiden mit der Zeit Schwefel auf. Dies führt zu einer Einschränkung der Speicherfähigkeit des Speicherkatalysators 12'', die nachfolgend als Alterung bezeichnet wird. Die andauernde Konvertierung von Abgasen unter anderem zu Stickstoff und Sauerstoff führt bei dem Dreiwegekatalysator 12' zu einer Minderung der Konvertierungsfähigkeit und damit zu einer Alterung.

Die Konvertierung der Abgase in dem Dreiwegekatalysator 12' stellt eine exotherme Reaktion dar, bei der Wärme entsteht. Daraus resultiert eine Erhöhung der Temperatur der durch den Katalysator 12 hindurchströmenden Abgase. Diese Temperaturerhöhung wird von dem Temperatursensor 13 und/oder von dem Temperatursensor 14 gemessen. Gleichzeitig erfolgt durch die exotherme Reaktion auch eine Erhöhung der Temperatur des Katalysators 12 selbst, die alternativ oder zusätzlich von dem Temperatursensor 13 und gegebenenfalls auch von dem Temperatursensor 14 gemessen wird.

Die durch die exotherme Reaktion hervorgerufene Temperaturerhöhung ist jedoch nicht ausreichend groß, um sicher detektiert zu werden.

Aus diesem Grund wird von dem Steuergerät 18 im Schichtbetrieb der Brennkraftmaschine 1 im Anschluss an eine Verbrennung eine zusätzliche Einspritzung von Kraftstoff in den Brennraum 4 durchgeführt. Dieser Kraftstoff wird jedoch nicht entzündet. Dadurch gelangt der Kraftstoff unverbrannt in das Abgasrohr 8 und den Katalysator 12. Aufgrund des dort vorhandenen Sauerstoffs und der dort herrschenden hohen Temperaturen reagiert der Kraftstoff im Abgasrohr 8 und im Katalysator 12 mit dem Sauerstoff. Dies führt zu einer Erhöhung der Temperatur des Abgases im Abgasrohr 8 und im Katalysator 12.

Das im Abgasrohr 8 vorhandene, eine erhöhte Temperatur aufweisende Abgas gelangt ebenfalls in den Katalysator 12. Dort findet aufgrund der Konvertierung des aus der zusätzlichen Einspritzung resultierenden Abgases eine weitere Temperaturerhöhung statt. Dies ergibt insgesamt eine größere Temperaturerhöhung aufgrund der Konvertierung des Abgases durch den Katalysator 12.

Zusätzlich hat die höhere Temperatur der in den Katalysator 12 eintretenden Abgase ebenfalls eine größere Temperaturerhöhung der Abgase im Katalysator 12 aufgrund der Konvertierung zur Folge.

Durch die zusätzliche Einspritzung von Kraftstoff im Anschluss an eine Verbrennung im Schichtbetrieb wird somit insgesamt eine größere Temperaturerhöhung der Abgase aufgrund der Konvertierung derselben im Katalysator 12 erreicht.

Aufgrund der Alterung des Dreiwegekatalysators 12' nimmt die Fähigkeit zur Konvertierung von Abgasen in dem Dreiwegekatalysator 12' ab. Dies führt zu einer Verminderung der Reaktion von Kraftstoff und Sauerstoff in dem Katalysator 12 und damit zu einer Verminderung der daraus resultierenden Temperaturerhöhung. Ebenfalls führt die geringere Fähigkeit zur Konvertierung zu einer Verminderung der durch die Konvertierung hervorgerufenen exothermen Reaktion und damit zu einer Verminderung der daraus resultierenden Temperaturerhöhung.

Von dem Steuergerät 18 wird die aktuell gemessene Temperaturerhöhung während des Betriebs der Brennkraftmaschine 1 überwacht. Dies kann dadurch erfolgen, dass die aktuelle Temperaturerhöhung mit einer Temperaturerhöhung verglichen wird, die bei einem neuen Dreiwegekatalysator 12' bzw. einem neuen Katalysator 12 gemessen worden ist. Alternativ oder zusätzlich kann die aktuelle Temperaturerhöhung mit einer Temperaturerhöhung verglichen werden, die bei einem defekten Dreiwegekatalysator 12' bzw. Katalysator 12 gemessen worden ist. Alternativ oder zusätzlich kann dies ebenfalls dadurch erfolgen, dass die aktuelle Temperaturerhöhung mit einer modellierten Temperaturerhöhung verglichen wird.

Bei einem Vergleich mit einem neuen Katalysator 12 wird die Differenz der aktuell gemessenen Temperaturerhöhung zu der Temperaturerhöhung des neuen Katalysators 12 immer größer. Überschreitet die Differenz der aktuellen Temperaturerhöhung zu der Temperaturerhöhung des neuen Katalysators 12 einen oberen Schwellwert, so wird von dem Steuergerät 18 darauf geschlossen, dass der Katalysator 12 nunmehr eine Alterung erreicht hat, die im Hinblick auf eine ausreichende Abgasreinigung nicht mehr hinnehmbar ist. Das Steuergerät 18 erzeugt daraufhin z.B. ein Signal, das von dem Fahrer oder von einer Werkstatt erkannt werden kann, und das den erforderlichen Austausch des Katalysators 12 anzeigt.

Bei einem Vergleich mit einem defekten Katalysator 12 wird die Differenz der aktuell gemessenen Temperaturerhöhung zu der Temperaturerhöhung des defekten Katalysators 12 immer kleiner, so dass die Differenz mit einem zugehörigen unteren Schwellwert verglichen wird, bei dessen Erreichen der Katalysator 12 ausgetauscht werden muss.

Bei der Verwendung der modellierten Temperaturerhöhung wird die Differenz zu der aktuellen Temperaturerhöhung ebenfalls immer größer, so dass die Differenz mit einem zugehörigen oberen Schwellwert verglichen wird, bei dessen Erreichen der Katalysator 12 ausgetauscht werden muss.

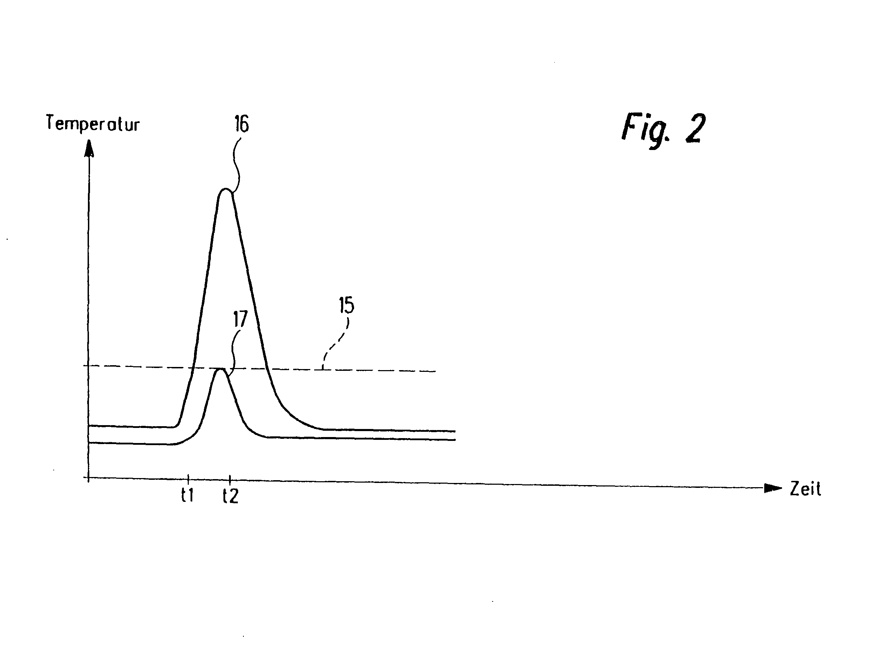

Alternativ oder zusätzlich können dem Vergleich die absoluten Temperaturen zugrunde gelegt werden. Dies ist in der Figur 2 dargestellt.

In der Figur 2 ist die Temperatur des aus dem Katalysator 12 austretenden Abgases über der Zeit aufgetragen. Bis zu einem Zeitpunkt t1 wird die Brennkraftmaschine 1 im Schichtbetrieb betrieben. Etwa im Zeitpunkt t1 erfolgt eine zusätzliche Einspritzung im Anschluss an eine erfolgte Verbrennung. Diese zusätzliche Einspritzung und die daraus ersuliterende zusätzliche Konvertierung der entstehenden Abgase durch den Katalysator 12 hat eine zusätzliche Temperaturerhöhung des Abgases zur Folge.

Die zusätzliche Temperaturerhöhung durch die zusätzliche Einspritzung ist gleichbedeutend mit einer Maximaltemperatur, die von dem Temperatursensor 13 und/oder dem Temperatursensor 14 gemessen wird. Diese Maximaltemperatur wird aufgrund der Alterung des Katalysators 12 mit der Zeit geringer.

Ist der Katalysator 12 noch nicht gealtert und weist der Katalysator 12 damit noch eine ausreichende Konvertierungsfähigkeit auf, so hat dies eine Maximaltemperatur zur Folge, die einen unteren Schwellwert 15 übersteigt. Dies ist in der Figur 2 mit der Bezugsziffer 16 gekennzeichnet.

Besitzt der Katalysator 12 jedoch keine ausreichende Konvertierungsfähigkeit mehr, ist also der Katalysator 12 gealtert und damit verbraucht, so wird der Schwellwert 15 nicht mehr überschritten. Dies ist in der Figur 2 mit der Bezugsziffer 17 gekennzeichnet.

Ab dem Zeitpunkt t2 wird die Brennkraftmaschine 1 dann wieder von dem Steuergerät 18 im Schichtbetrieb betrieben.

Das vorstehende Verfahren kann fortlaufend während des Betriebs der Brennkraftmaschine 1 eingesetzt werden. Alternativ oder zusätzlich ist es möglich, das Verfahren speziell zur Diagnose der Alterung des Katalysators 12 einzusetzen.

## Patentansprüche

1. verfahren zur Diagnose eines Katalysators (12) einer Brennkraftmaschine (1) insbesondere eines Kraftfahrzeugs, bei dem Kraftstoff in einer ersten Betriebsart während einer Ansaugphase und in einer zweiten Betriebsart während einer Verdichtungsphase in einen Brennraum (4) direkt eingespritzt und verbrannt wird, und bei dem bei der Verbrennung entstehendes Abgas dem Katalysator (12) zugeführt wird, **dadurch gekennzeichnet, dass** in der zweiten Betriebsart im Anschluss an eine Verbrennung zusätzlich Kraftstoff eingespritzt wird, und dass die Temperatur des Abgases in dem oder nach dem Katalysator (12) gemessen und mit einem Schwellwert verglichen wird.

2. verfahren nach Anspruch 1, **dadurch gekennzeichnet, dass** eine Temperaturerhöhung gemessen und mit einer Temperaturerhöhung verglichen wird, die bei einem neuen bzwdefekten Katalysator (12) gemessen worden ist, und dass die Differenz mit einem oberen bzw. unteren Grenzwert verglichen wird.

3. Verfahren nach einem der Ansprüche 1 oder 2, **dadurch gekennzeichnet, dass** eine Temperaturerhöhung gemessen und mit einer modellierten Temperaturerhöhung verglichen wird, und dass die Differenz mit einem oberen Grenzwert verglichen wird.

4. verfahren nach einem der Ansprüche 1 bis 3, **dadurch gekennzeichnet, dass** eine Maximaltemperatur gemessen und mit einem unteren Schwellwert (15) verglichen wird.

5. verfahren nach einem der Ansprüche 1 bis 4, **dadurch gekennzeichnet, dass** der zusätzlich eingespritzte Kraftstoff nicht entzündet wird.

6. Programm für ein Rechengerät, **dadurch gekennzeichnet, dass** es zur Anwendung in einem Verfahren nach einem der Ansprüche 1 bis 5 programmiert ist.

7. Steuergerät (18) zur Diagnose eines Katalysators (12) einer Brennkraftmaschine (1) insbesondere eines Kraftfahrzeugs, **dadurch gekennzeichnet, dass** es zur Anwendung in einem Verfahren nach einem der Ansprüche 1 bis 5 hergerichtet ist.

8. Brennkraftmaschine (1) insbesondere für ein Kraftfahrzeug, mit einem Steuergerät (18) zur Diagnose eines Katalysators (12), **dadurch gekennzeichnet, dass** das Steuergerät (18) zur Anwendung in einem verfahren nach einem der Ansprüche 1 bis 5 hergerichtet ist.

## Claims

1. Method for the diagnosis of a catalytic converter (12) of an internal combustion engine (1), in particular of a motor vehicle, in which, during an intake phase in a first operating mode and during a compression phase in a second operating mode, fuel is injected directly into a combustion chamber (4) and burned, and in which exhaust gas formed during the combustion is fed to the catalytic converter (12), **characterized in that** fuel is additionally injected following combustion in the second operating mode, and **in that** the temperature of the exhaust gas in or downstream of the catalytic converter (12) is measured and compared with a threshold value.

2. Method according to Claim 1, **characterized in that** a temperature increase is measured and compared with a temperature increase measured in the case of a new or defective catalytic converter (12), and **in that** the difference is compared with an upper or lower limit value.

3. Method according to either of Claims 1 and 2,
**characterized in that** a temperature increase is measured and compared with a modelled temperature increase, and **in that** the difference is compared with an upper limit value.

4. Method according to one of Claims 1 to 3,
**characterized in that** a maximum temperature is measured and compared with a lower threshold value (15).

5. Method according to one of Claims 1 to 4,
**characterized in that** the additionally injected fuel is not ignited.

6. Program for a computing device, **characterized in that** it is programmed for use in a method according to one of Claims 1 to 5.

7. Control device (18) for the diagnosis of a catalytic converter (12) of an internal combustion engine (1), in particular of a motor vehicle, **characterized in that** it is set up for use in a method according to one of Claims 1 to 5.

8. Internal combustion engine (1), in particular for a motor vehicle, with a control device (18) for the diagnosis of a catalytic converter (12), **characterized in that** the control device (18) is set up for use in a method according to one of Claims 1 to 5.

## Revendications

1. Procédé de diagnostic du catalyseur (12) d'un moteur à combustion (1), notamment d'un véhicule automobile, selon lequel le carburant est injecté directement dans la chambre de combustion (4) suivant un premier mode de fonctionnement, pendant la phase d'admission et pendant la phase de compression suivant un second mode de fonctionnement, pour être brûlé, les gaz d'échappement dégagés par la combustion étant fournis au catalyseur (12),
**caractérisé en ce que**
dans le second mode de fonctionnement, après une combustion, on injecte du carburant supplémentaire et
on mesure la température des gaz d'échappement dans le catalyseur (12) ou après celui-ci et on compare la température à un seuil.

2. Procédé selon la revendication 1,
**caractérisé en ce qu'**
on mesure une augmentation de température et on la compare à une augmentation de température mesurée dans un catalyseur (12, 9) neuf ou défectueux et
on compare la différence à une valeur limite supérieure ou une valeur limite inférieure.

3. Procédé selon l'une des revendications 1 ou 2,
**caractérisé en ce qu'**
on mesure une élévation de température, on la compare à une élévation de température modélisée et on compare la différence à une valeur limite supérieure.

4. Procédé selon l'une des revendications 1 à 3,
**caractérisé en ce qu'**
on mesure une température maximale et on la compare à un seuil inférieur (15).

5. Procédé selon l'une des revendications 1 à 4,
**caractérisé en ce qu'**
on n'allume pas le carburant supplémentaire injecté.

6. Programme de calculateur,
**caractérisé en ce qu'**
il est établi pour exécuter un procédé selon l'une des revendications 1 à 5.

7. Appareil de commande (18) pour diagnostiquer un catalyseur (12) d'un moteur à combustion (1) notamment d'un véhicule automobile,
**caractérisé en ce qu'**
il est conçu pour l'application d'un procédé selon l'une des revendications 1 à 5.

8. Moteur à combustion (1) notamment d'un véhicule automobile comportant un appareil de commande (18) pour diagnostiquer un catalyseur (12),
**caractérisé en ce que**
l'appareil de commande (18) est destiné à appliquer un procédé selon l'une des revendications 1 à 5.
